# EUROPEAN PATENT SPECIFICATION

(11) **EP 0 724 690 B1**
(45) Date of publication and mention of the grant of the patent: **14.04.1999**
(21) Application number: 94931250.8
(22) Date of filing: 18.10.1994
(51) Int. Cl.: F04C 18/16, F04C 29/10, F01C 21/16

(54) **DEVICE FOR CONNECTING A SCREW ROTOR MACHINE TO A DRIVING OR DRIVEN PULLEY**
VORICHTUNG ZUM VERBINDEN EINER SCHRAUBENKOLBENMASCHINE MIT EINER RIMENSCHEIBE
DISPOSITIF DE RACCORDEMENT D'UNE MACHINE A ROTORS EN FORME DE VIS A UNE POULIE MOTRICE OU COMMANDEE

(43) Date of publication of application: 07.08.1996
(73) Proprietor: OPCON AUTOROTOR AB, 132 02 Saltsjö-Boo (SE)
(72) Inventor: OSCARSSON, Johnny, S-134 34 Gustavsberg (SE)
(74) Representative: Waldinger, Ake
(86) International application number: SE9400975
(87) International publication number: WO9511385

(56) References cited:
- DE-C- 492 367
- DE-C- 3 706 588
- GB-A- 2 019 493
- PATENT ABSTRACTS OF JAPAN, Vol. 14, No. 357, M-1005; & JP,A,2 125 999 (ATSUGI UNISIA CORP), 14 May 1990.

## Description

The present invention relates to a device connecting a screw rotor machine provided with a male rotor and a female rotor rotatably journalled in a housing provided with inlet and outlet ports for a compressible working fluid, especially a supercharger/expansion machine, to an exterior driving or driven pulley, wherein, at one end, the rotors are provided with shaft pivots protruding out of the housing and to which pulleys are attached for coupling the rotors by means of a belt to the exterior pulley.

Devices of this kind are known (see e.g. DE 3706588) and give the screw rotor machine a fixed gear ratio in relation to the exterior pulley. It often occurs, however, that a variable or at least changed gear ratio is requested. This can be achieved by a continuously or discontinuously variable gear integrated with the exterior pulley. Such a gear is space consuming and has a maintenance and service demand that is difficult to fulfil especially in such a limited space as an engine compartment. As an alternative it is possible to drive the screw rotor machine alternately by the shaft pivot of the male rotor or the female rotor, which requires an engaging and disengaging clutch between each of the shaft pivots and the associated pulley and a control means that permits only one clutch at a time in engaged position. Also a device of this kind will be space consuming and complicated, amongst other reasons because there is no space for two clutches of this type side by side on the shaft pivots. Therefore the clutches must be placed axially displaced which increases the constructional length of the shaft pivots, which means a considerable drawback.

Such a device is known from GB-A-2 019 493 showing gears, however in substitute for pulleys and a belt.

The object of the invention is to achieve a more uncomplicated and reliable solution of the problem of driving a screw rotor machine with two different gear ratios.

This is achieved, according to the invention, in that the pulleys attached to the shaft pivots are driven with different speeds, and that the pulley running with the lower speed is connected to its shaft pivot via an engageable and disengageable clutch, and the pulley of the other rotor is attached to its shaft pivot via a freewheel clutch permitting the shaft pivot to rotate faster than the pulley when the engageable and disengageable clutch is engaged. A freewheel clutch is not more space consuming than a conventional bearing and, hence, it does not obstruct the mounting of the engageable and disengageable clutch of the adjacent shaft pivot. By disengageing the clutch the speed of the screw rotor machine will decrease until the freewheel clutch automatically starts driving, which means that in practice a decrease of the speed by suitable 2.5 times can be obtained by this simple measure.

The invention will be explained more in detail in the following description, by way of example, of an embodiment of a device according to the invention, the description being read with reference to the accompanying drawings, in which:-
Figure 1 is a longitudinal section of the device,
Figure 2 is an end view showing the belt and the pulleys for driving the screw rotor machine, and
Figure 3 shows a modification of the device shown in Fig.1.

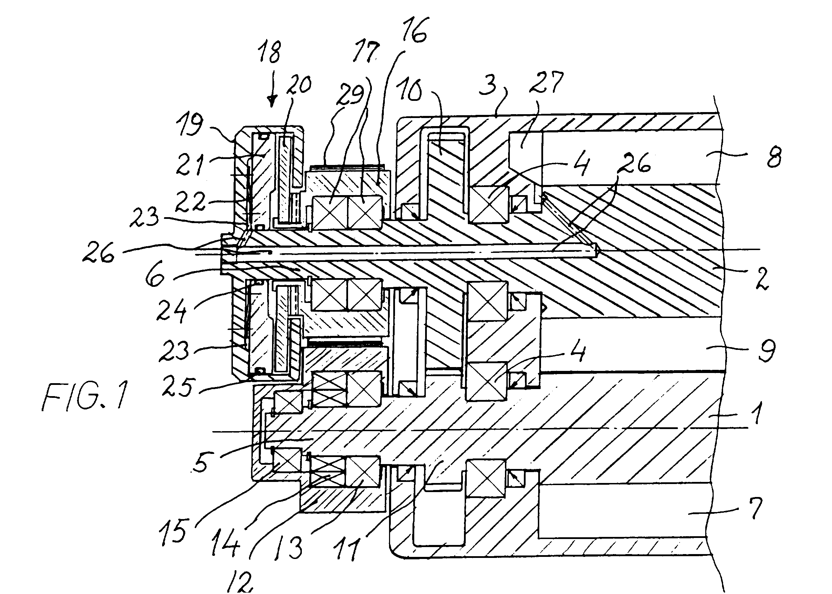

Fig.1 shows the driven end portion of a screw rotor machine which is provided with a male rotor 1 and a female rotor 2 rotatably mounted in the usual way in a housing 3 by means of bearings 4 on the respective shaft pivots (5,6) of the rotors. The helically extending lands 7 and 8 of the male and female rotors 1 and 2, respectively, engage each other at 9 with an extremely small clearance, which is maintained by two synchronizing gear wheels 10 and 11, respectively, secured to the shaft pivots 5,6. A pulley 12 is rotatably journalled in one direction on the shaft pivot 5 by means of a bearing 13, a freewheel clutch 14, and a further bearing 15. A further pulley 16 is rotatably mounted on the shaft pivot 6 by means of two bearings 17. An engageable and disengageable clutch 18 is mounted on the outermost end of the shaft pivot 6 and comprises a housing 19 secured to the shaft pivot 6 and a ring-shaped clutch disk 20 attached via moment transmitting springs to the pulley 16. The clutch disk can be pushed against a pressure surface on an inner wall of the housing 19 by means of a ring-shaped, axially movable piston 21, which is connected to a ring-shaped return spring 22 attached to the housing 19. The spring is positioned in a chamber 23, which is sealed by means of piston rings 24,25 on the piston 21, and communicates via a channel 26 in the shaft pivot 6 with a chamber 27 on the outlet side of the rotors 1,2.

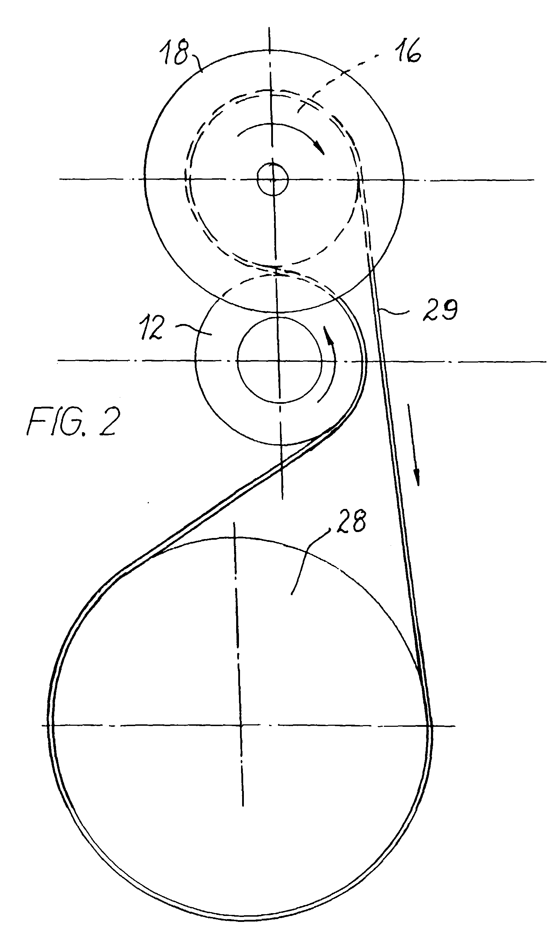

The pulleys 12 and 16 and an exterior pulley 28 attached to the crankshaft of the engine are, as shown on Fig.2, connected by a belt 29 running around the pulleys 28 and 16 and applying with the outside against a portion of the periphery of the pulley 12.

The diameters of the pulleys 12 and 16 are chosen and the freewheel clutch 14 is arranged such, that the shaft pivot 5, when the clutch 18 is engaged, rotates faster than the pulley 12 in dependence on the gear ratio of the synchronizing gear wheels 10,11. When the clutch 18 is disengaged the speed of the shaft pivot 5 will decrease until the freewheel clutch engages and takes over the driving with a reduction of speed, which in practice suitably is about 2.5.

The operating of the clutch 18 can occur automatically at a predetermined outlet pressure of the screw rotor machine, as shown in Fig.1, by the pressure in chamber 27 being transmitted to the chamber 23 via the channel 26. When the pressure in chamber 23 reaches the predetermined value piston 21 is pushed against the clutch disk 20, which in turn is pushed against the pressure surface in the housing 19. Thus, the shaft pivot 6 engages the pulley 16. When the pressure decreases below the predetermined value the piston 21 is pulled back from engagement with the clutch disk 20 by the return spring 22.

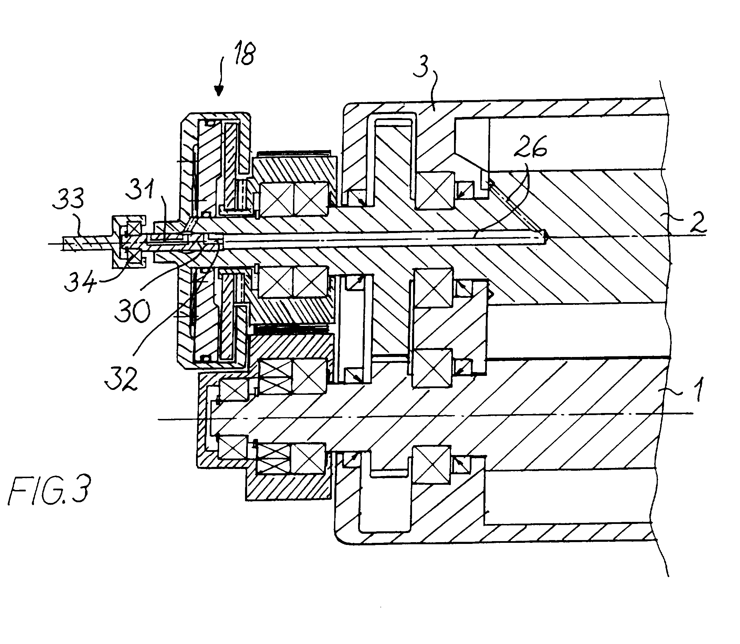

Operating of the clutch 18 is also possible manually by means of a common valve device, for instance as shown in Fig.3. In that case an axially movable slide valve 30 is arranged in a boring in the free end of the shaft pivot 5. The slide valve 30 is provided with a ventilating channel 31, which in the shown position ventilates the chamber 23, which means that the clutch 18 is disengaged. Moreover, the slide valve 30 is provided with a channel 32, which, when the slide valve is withdrawn a short distance such that the ventilating of the outlet chamber ends, is brought in a position in which channel 26 and, accordingly, the outlet chamber 27 is connected to chamber 23, such that the piston 21 brings the clutch 18 to engaged position if the pressure is high enough.

The slide valve 30 rotates together with the shaft pivot 5, and a control rod 33 is connected to the slide valve 30 by means of a thrust bearing 34 for controlling the slide valve 30. The control rod 33 is operated in a suitable way, for instance by the pressure in the manifold of the engine, or alternatively by the position of the throttle (not shown).

The shown device is applicable in many ways, for example when a screw compressor is used in installation where the capacity has to be changed. That is the case in connection with supercharging of internal combustion engines and a low compressor capacity is desired at partial load of the engine, and a high capacity is desired at full load. The compressor runs with the high capacity when the clutch is engaged, because the male rotor 1 is driven via the synchronizing gear wheels 10,11, and the shaft pivot 5 rotates faster than the belt 12, which is permitted by the freewheel clutch.

The compressor capacity increases instantaneously and, hence, also the turning moment of the engine, at the same time as the clutch is engaged. In order to avoid a sudden increase of speed, the throttle of the engine is suitably operated such, that, irrespective of the capacity of the compressor, the engine is fed with an air quantity that corresponds to the position of the throttle pedal, i.e. the throttle may be actuated by a device controlled by for instance the pressure in the manifold of the engine.

Then, when the position of the throttle pedal is changed such, that the engine runs with a partial load pressure in the manifold less than 1 bar abs. the clutch 18 is disengaged and the compressor is driven by the belt of the male rotor via the now engaged freewheel clutch 14. The compressor capacity thus has decreased to about 50% and, accordingly, also the driving power.

The device according to the invention also brings about improvements consisting of improved expander power when expander operation is used in the partial load area. Moreover, the device can be used when a high supercharging pressure is desired at for instance low engine speed and a lower supercharging pressure at other engine speeds, which is a very valuable quality.

## Claims

1. A screw rotor machine provided with a male rotor (1) and a female rotor (2) rotating at different speeds and rotatably journalled in a housing (3) provided with inlet and outlet ports for a compressible working fluid, especially a supercharger/expansion machine for an internal combustion engine, with an exterior driving or driven pulley (28), wherein, at one end, the rotors (1,2) are provided with shaft pivots (5,6) protruding out of the housing (3) and to which pulleys (12,16) are attached for coupling the rotors by means of a belt (29) to the exterior pulley (28), **characterized** in that one of the rotors (1) is faster than the other rotor (2) by a factor greater than that between the speeds of the pulleys (12,16), and the pulley (16) attached to the rotor (2) which, in use, runs with the lower speed is connected to its shaft pivot (6) via an engageable and disengageable clutch (18), and the pulley (12) of the other rotor (1) is attached to its shaft pivot (5) via a freewheel clutch (14) permitting this latter shaft pivot (5) to rotate faster than its respective pulley when the engageable and disengageable clutch (18) is engaged.

2. A machine according to claim 1, **characterized** in that the inside of the belt (29) applies against a large part of the periphery of the pulley (16) of the female rotor, and the outside of the belt applies against a part of the periphery of the pulley (12) of the male rotor.

3. A machine according to claim 1 or 2, **characterized** in that the engageable and disengageable clutch (18) is controlled by the pressure from the outlet of the screw rotor machine via a channel (26) in the shaft pivot (6) of the female rotor (2).

4. A machine according to claim 3, **characterized** in that a slide valve (30) in an axial boring in the shaft pivot (6) of the female rotor (2) is arranged to control the pressure supply to the engageable and disengageable clutch (18).

## Patentansprüche

1. Schraubenrotormaschine mit einem männlichen Rotor (1) und einem weiblichen Rotor (2), die sich mit unterschiedlichen Geschwindigkeiten drehen und in einem Gehäuse (3) drehbar gelagert sind, das mit Einlaß- und Auslaßöffnungen für ein komprimierbares Arbeitsfluid versehen ist, insbesondere eine Auflade- /Expansionsmaschine für eine Verbrennungskraftmaschine mit außenliegender Antriebs- oder Abtriebsscheibe (28), wobei die Rotoren (1, 2) an einem Ende Wellenzapfen (5, 6) aufweisen, die aus dem Gehäuse (3) ragen und an welchen Riemenscheiben (12, 16) angeordnet sind, um die Rotoren mittels eines Riemens (29) an die außenliegende Scheibe (28) zu koppeln, **dadurch gekennzeichnet,** daß einer der Rotoren (1) gegenüber dem anderen Rotor (2) um einen Faktor schneller läuft, der größer ist als der Faktor zwischen den Geschwindigkeiten der Riemenscheiben (12, 16), und die an dem Rotor (2), der im Betrieb mit der niedrigeren Geschwindigkeit dreht, angeordnete Riemenscheibe (16) mit ihrem Wellenzapfen (6) über eine schließ- und trennbare Kupplung (18) verbunden ist, und weiterhin die Riemenscheibe (12) des anderen Rotors (1) an ihrem Wellenzapfen (5) über eine Freilaufkupplung (14) befestigt ist, die es diesem Wellenzapfen (5) erlaubt, schneller als seine zugehörige Riemenscheibe zu rotieren, wenn die schließ- und trennbare Kupplung (18) geschlossen ist.

2. Maschine nach Anspruch 1, **dadurch gekennzeichnet,** daß die Innenseite des Riemens (29) an einem großen Teil des Umfangs der Riemenscheibe (16) des weiblichen Rotors und die Außenseite des Riemens an einem Teil des Umfangs der Riemenscheibe (12) des männlichen Rotors anliegt.

3. Maschine nach Anspruch 1 oder 2, **dadurch gekennzeichnet,** daß die schließ- und trennbare Kupplung (18) über einen Kanal (26) in dem Wellenzapfen (6) des weiblichen Rotors (2) durch den Druck vom Auslaß der Schraubenrotormaschine gesteuert ist.

4. Maschine nach Anspruch 3, **dadurch gekennzeichnet,** daß ein Ventilschieber (30) in einer axialen Bohrung in dem Wellenzapfen (6) des weiblichen Rotors (2) angeordnet ist, um die Druckversorgung der schließ- und trennbaren Kupplung (18) zu steuern.

## Revendications

1. Machine à rotor à vis pourvue d'un rotor mâle (1) et d'un rotor femelle (2) tournant à des vitesses différentes et qui tourillonnent dans un carter (3) pourvu d'orifices d'entrée et de sortie pour un fluide de travail compressible, spécialement une machine de suralimentation/détente pour un moteur à combustion interne, avec une poulie extérieure d'entraînement ou entraînée (28), dans laquelle, à une extrémité, les rotors (1, 2) sont pourvus de pivots d'arbre (5, 6) qui dépassent du carter (3) et sur lesquels sont fixées des poulies (12, 16) afin de relier les rotors au moyen d'une courroie (29) à la poulie extérieure (28), caractérisée en ce que l'un des rotors (1) est plus rapide que l'autre rotor (2) d'un facteur supérieur à celui entre les vitesses des poulies (12, 16), et la poulie (16) est fixée sur le rotor (2) qui, lors de l'utilisation, tourne à la vitesse plus faible et est reliée à son pivot d'arbre (6) par l'intermédiaire d'un embrayage (18) pouvant être engagé et désengagé, et la poulie (12) de l'autre rotor mâle (1) est fixé sur son pivot d'arbre (5) par l'intermédiaire d'un embrayage à roue libre (14), ce qui permet à ce dernier pivot d'arbre (5) de tourner plus vite que sa poulie respective lorsque l'embrayage (18) pouvant être engagé et désengagé est engagé.

2. Machine selon la revendication 1, caractérisée en ce que l'intérieur de la courroie (29) porte contre une grande partie de la périphérie de la poulie (16) du rotor femelle, et l'extérieur de la courroie porte contre une partie de la périphérie de la poulie (12) du rotor mâle.

3. Machine selon la revendication 1 ou 2, caractérisée en ce que l'embrayage (18) pouvant être engagé et désengagé est commandé par la pression de la sortie de la machine à rotor à vis par l'intermédiaire d'un canal (26) dans le pivot d'arbre (6) du rotor femelle (2).

4. Machine selon la revendication 3, caractérisée en ce qu'une soupape à tiroir (30) dans un alésage axial dans le pivot d'arbre (6) du rotor femelle (2) est prévue pour commander l'alimentation en pression vers l'embrayage (18) pouvant être engagé et désengagé.
